# EUROPÄISCHE PATENTSCHRIFT

(11) **EP 4 048 631 B1**
(45) Veröffentlichungstag und Bekanntmachung des Hinweises auf die Patenterteilung: **08.03.2023**
(21) Anmeldenummer: 20808010.1
(22) Anmeldetag: 23.10.2020
(51) Int. Cl.: C01B 13/02, B01D 53/04, F02B 47/10, F02G 5/02

(54) **VERFAHREN ZUR PROZESSINTEGRIERTEN SAUERSTOFF-VERSORGUNG EINES WASSERSTOFF-KREISLAUFMOTORS MIT KREISLAUFFÜHRUNG EINES EDELGASES**
METHOD FOR PROCESS-INTEGRATED OXYGEN SUPPLY OF A HYDROGEN CIRCULATION ENGINE COMPRISING RECIRCULATION OF A NOBLE GAS
PROCÉDÉ POUR ALIMENTER, AU MOYEN D'OXYGÈNE GÉNÉRÉ DE MANIÈRE INTÉGRÉE AU PROCESSUS, UN MOTEUR À CIRCUIT D'HYDROGÈNE PRÉSENTANT UNE CIRCULATION D'UN GAZ NOBLE

(30) Priorität: 25.10.2019 DE 102019128882
(43) Veröffentlichungstag der Anmeldung: 31.08.2022
(73) Patentinhaber: Fraunhofer-Gesellschaft zur Förderung der angewandten Forschung e.V., 80686 München (DE)
(72) Erfinder: KRIEGEL, Ralf, 07768 Kahla (DE)
(86) Internationale Anmeldenummer: PCT/DE2020/100913
(87) Internationale Veröffentlichungsnummer: WO 2021/078333

(56) Entgegenhaltungen:
- EP-A1- 0 913 184
- EP-B1- 0 913 184
- WO-A2-2006/037006
- DE-B4-102005 034 071
- JP-A- 2009 264 108

## Beschreibung

Die Erfindung betrifft ein Verfahren zur Versorgung von mit Wasserstoff betriebenen Verbrennungskraftmaschinen mit Sauerstoff, wobei außerdem ein Inertgas, bevorzugt Argon, im Kreislauf geführt wird.

Der Erfindung liegt das Anliegen zugrunde, preiswerte Verbrennungskraftmaschinen für die lokale Energieproduktion oder den Antrieb von Maschinen und Fahrzeugen einzusetzen, dabei jedoch durch den Einsatz von Wasserstoff als Treibstoff jegliche CO₂-Emissionen zu vermeiden und gleichzeitig die Effizienz der Energieumwandlung merklich zu erhöhen.

Konventionelle Kolbenmotoren verbrennen kohlenwasserstoffhaltige Treibstoffe in Form von Gasen oder Flüssigkeiten mit dem Oxidatorgas Luft, wobei ein CO₂- und H₂O-haltiges Abgas entsteht. Verbrennungsmotoren ohne CO₂-Emissionen sind nur durch aufwändige Speicherung des erzeugten CO₂ oder durch Verwendung kohlenstofffreier Treibstoffe wie Wasserstoff oder NH₃ realisierbar, da Letztere nur Wasserdampf bzw. Wasserdampf und Stickstoff emittieren. Derartige Treibstoffe weisen jedoch ein deutlich anderes Brennverhalten als Kohlenwasserstoffe auf. So liegt die Flammenausbreitungsgeschwindigkeit bei Wasserstoff z. B. deutlich höher als bei den gängigen Kohlenwasserstoffen (CH₄/Luft: ≈ 40 cm/s).

Bei Wasserstoff-Motoren läuft die Verbrennung bereits mit Luft sehr schnell ab, so dass die mechanischen Belastungen im Betrieb sehr schnell ansteigen. Obwohl eine Erhöhung des Sauerstoffgehalts im Oxidatorgas die Flammenausbreitung noch stark beschleunigen würde, offenbaren mehrere Patente sogar einen Betrieb mit einem Knallgasgemisch (DE 38 09 386 A1) oder mit reinem Wasserstoff und Sauerstoff aus einem vorgeschalteten Elektrolyseur (WO 2006/037006 A3), aus der Reaktion eines Erdalkalimetalls mit Wasser (US 4 411 223 A) bzw. aus einer plasmachemischen Umsetzung (JP H07 292 372 A). Die resultierenden Materialprobleme einer ungebremsten Knallgasreaktion werden nicht diskutiert. Einen praktikableren Lösungsansatz bietet die Kühlung der Verbrennung von Wasserstoff mit Sauerstoff durch Zumischen von Argon (JP 2009 264 108 A).

Nach mehreren gescheiterten Entwicklungsprojekten zum Wasserstoffmotor wurde kürzlich durch die WTZ Roßlau gezeigt, dass mit diesem letztgenannten Ansatz ein Kreislauf-Verbrennungsmotor mit einem deutlich verbesserten Wirkungsgrad möglich ist (Cech, M., Ehrler, T., Tschalamoff, T., Knape, M., Reiser, Ch.: Zero Emission-Kreislaufmotor zur Rückverstromung von grünem Wasserstoff. 11. Dessauer Gasmotoren-Konferenz, 11.-12. 04. 2019, Dessau). Bisher werden jedoch nur Wasserstoff und Sauerstoff aus der Wasserelektrolyse für den Betrieb dieses stationären Motors eingesetzt. Beide Gase müssen demnach stets vorrätig sein. Eine breite Anwendung dieses Brennverfahrens würde zusätzlich zur Wasserstoffinfrastruktur die Speicherung und Verteilung von reinem Sauerstoff erfordern. Eine Belieferung mit flüssigem oder komprimiertem gasförmigen Sauerstoff ist jedoch auf absehbare Zeit nicht wirtschaftlich, da der Sauerstoffpreis mit sinkender Abnahmemenge durch den logistischen Aufwand stark ansteigt. Bei dem geringen Sauerstoffbedarf kleiner bis mittlerer Wasserstoffmotoren ist ein wirtschaftlicher Betrieb mit kommerziell erzeugtem Sauerstoff nicht wirtschaftlich. Der Einsatz von Sauerstoff aus der Wasserelektrolyse mit dem extrem hohen Energiebedarf von ca. 8,5 kWh/Nm³ Sauerstoff ist nur für stationäre Anwendungen der Wasserstoff-Rückverstromung sinnvoll, bei denen der erforderliche Sauerstoff bereits vorhanden ist. Er scheidet aus energetischen und wirtschaftlichen Gründen für eine Sauerstoff-Versorgung stationärer oder mobiler Verbrennungsmotoren i. d. R. aus.

Ein naheliegender Lösungsansatz für diese Problematik ist deshalb die Erzeugung von Sauerstoff direkt am Verbrennungsmotor aus Luft unter Verwendung der vom Motor freigesetzten Energie. Die Sauerstofferzeugung am Motor wurde deshalb bereits 1972 mit der Patentschrift US 3 792 690 A offenbart, wobei alle damals bekannten Verfahren zur Sauerstoff-Bereitstellung benannt wurden. Im grundlegenden Patentanspruch wird anstelle der üblichen Kühlung der Verbrennung mit Luftstickstoff die Kühlung durch Verdünnung des hochreaktiven Sauerstoffs mit CO₂ vorgeschlagen, welches aus dem Abgas entnommen wurde. Dieser Ansatz ist dementsprechend auf den Einsatz kohlenstoffhaltiger Treibstoffe ausgerichtet.

Die technischen Möglichkeiten zur Sauerstoff-Versorgung eines Wasserstoff-Kreislaufmotors beruhen auf den üblichen technischen Verfahren zur Sauerstoff-Abtrennung aus Luft. Die Mehrzahl der bekannten Trennverfahren ist nur zu einer Anreicherung von Gasen mit Sauerstoff geeignet. So werden mit Polymermembranen Sauerstoff-Konzentrationen bis ca. 40 Vol % (Meriläinen, A., Seppälä, A., Kauranen, P.: Minimizing specific energy consumption of oxygen enrichment in polymeric hollow fiber membrane modules. Applied Energy 94 (2012), S. 285-294) und durch Druckwechseladsorption an Zeolithen max. 95 Vol-% (Rao, P., Muller, M.: Industrial Oxygen: Its Generation and Use. Proceedings of ACEEE Summer Study on Energy Efficiency in Industry (2007), 6-124 bis 6-134) erreicht. Spezielle Sauerstoff-Speichermaterialien (OSM - Oxygen Storage Material) auf Basis komplex zusammengesetzter Mischoxide sind in der Lage, bei mittleren bis hohen Temperaturen je nach Sauerstoff-Partialdruck- und Temperaturänderung Sauerstoff selektiv und reversibel ins Kristallgitter der festen Phase ein- und wieder auszubauen (DE 10 2005 034 071 B4). Dementsprechend können sowohl Temperaturänderungen als auch Änderungen des Sauerstoff-Partialdrucks zur Sauerstoff-Anreicherung in Gasen genutzt werden. Die gezielte Änderung des Sauerstoff-Partialdrucks wird teilweise auch durch Spülgase wie CO₂ oder Dampf realisiert (EP 0 913 184 B1) oder es werden chemische Reaktionen wie die Partialoxidation von Kohlenwasserstoffen am Sauerstoff-Speichermaterial durchgeführt (US 6 379 586 B1). Zum Energiebedarf des Verfahrens gibt es bislang keine belastbaren Angaben.

Ein Wasserstoff-Kreislaufmotor benötigt im Gegensatz zu den Sauerstoff-Anreicherungsverfahren reinen Sauerstoff, da alle eingetragenen gasförmigen Verunreinigungen sich im Betrieb immer stärker anreichern und zur Erhöhung der rezirkulierten Gasmenge bzw. des Gesamtdruckes im Gaskreislauf führen. Deshalb müsste von Zeit zu Zeit die überschüssige Gasmenge abgeblasen werden, wobei jedoch auch das im Kreislauf geführte Edelgas verloren gehen würde. Dieses müsste regelmäßig nachdosiert und z. B. bei Fahrzeugen ebenfalls in einem Drucktank mitgeführt werden. Dies ist nicht praktikabel. Außerdem würde ein mit dem Sauerstoff eingebrachter Luftstickstoff zur Bildung von Stickoxiden führen und mit dem Kondenswasser unter Umständen salpetrige Säure oder Salpetersäure bilden.

Aus den genannten Gründen muss ein Wasserstoff-Kreislaufmotor als gasdichter Motor ausgeführt und mit einem stickstofffreien Oxidatorgas betrieben werden.

Die bislang energieeffizienteste Methode zur Erzeugung von reinem Sauerstoff basiert auf gemischt leitenden Membranen (WO 2014/161 531 A2). Der Energiebedarf für die Gaskompression liegt für das Verfahren bei lediglich 0,2 kWh/Nm³ Sauerstoff (Kriegel, R.: Sauerstoff-liefernde Keramiken für Verbrennungsprozesse. Gaswärme international 4 (2017), S. 43 bis 48). Dieser Energiebedarf muss aber aus der vom Verbrennungsmotor erzeugten Nutzarbeit gedeckt werden, so dass die Wirkungsgradsteigerungen des Wasserstoff-Kreislaufmotors nahezu aufgebraucht werden. Auch dieses Verfahren zur Sauerstoff-Versorgung eines Wasserstoff-Kreislaufmotors ist somit aus wirtschaftlichen Gründen nicht sinnvoll. Für Verfahren zur Sauerstoff-Versorgung mit einem typischerweise höheren spezifischen Energieverbrauch verschärft sich die Situation entsprechend.

Die Wirtschaftlichkeit der lokalen Energieproduktion wird weiterhin durch die hohen Investitionskosten für die Sauerstoff-Anlagen, die Abgasrückführung und die definierte Mischung des Abgases mit dem Sauerstoff stark beeinträchtigt. Es erscheint deshalb folgerichtig, dass sich ein Sauerstoff-Betrieb von mit konventionellen Treibstoffen betriebenen Kolbenmotoren bislang nicht durchsetzen konnte.

Der Erfindung liegt die Aufgabe zugrunde, für einen Wasserstoff-Kreislaufmotor mit Argon-Kreislauf eine preiswerte, lokale Versorgung mit reinem Sauerstoff durch dessen Abtrennung aus der Umgebungsluft zu realisieren, ohne dass dafür die abgegebene Nutzarbeit des Motors eingesetzt werden muss.

Erfindungsgemäß wird die Aufgabe dadurch gelöst, dass zur Sauerstoff-Erzeugung OSM-Keramiken sowie die Abgaswärme und der niedrige Sauerstoff-Partialdruck des Abgases eingesetzt werden. Es werden mindestens zwei mit OSM-Keramik gefüllte Reaktoren verwendet, die abwechselnd mit Abgas gespült und mit Luft regeneriert werden. Verluste an Inertgas und der Eintrag von Luftstickstoff werden durch eine Zwischenspülung mit Niederdruckdampf vermieden. Letzterer wird mit der Abwärme des Abgases bzw. der Abluft erzeugt. Während der Spülung der Reaktoren entsteht ein Gemisch aus Wasserdampf, Inertgas und Sauerstoff. Daran anschließend wird der Sauerstoff-Gehalt in der Gasphase durch Auskondensieren des Wasserdampfes merklich erhöht.

Wird eine OSM-Keramik bei annähernd konstanter Temperatur wechselseitig beladen (mit Luft) und entladen (Spülgas), so kann im zunächst sauerstofffreien Spülgas eine Sauerstoff-Konzentration wie in Luft erreicht werden. Obwohl sich der Prozess des Sauerstoff-Ausbaus mit steigendem Sauerstoff-Gehalt verlangsamt, kann der maximal erreichbaren Sauerstoff-Gehalt im Gas somit näherungsweise berechnet werden. Bei Kenntnis der Gasdurchsätze erhält man deshalb auch die lieferbare Sauerstoff-Menge. Dies ist anhand der nachfolgenden Gleichungen exemplarisch gezeigt:
1.

   H₂ (g) + 0,5 O₂ + 2 Ar → H₂O (g) + 2 Ar

   (20 Vol.-% O₂ im Oxidatorgas)
2.

   H₂O (g) + 2 Ar + OSM(ox.) -> H₂O + 2 Ar + 0,75 O₂ +OSM(red.)

   (≈ 20 Vol.-% O₂ im Kreislaufgas)
3.

   H₂O (g) + 2 Ar + 0,75 O₂ -> 1 H₂O(l)↓ + 2 Ar + 0,75 O₂ ()

   (nach Kondensation des Wasserdampfes: ca. 27,3 Vol.-% O₂ im Ar oder im Kreislaufgas)

Das Kreislaufgas ist nach der H₂O-Abtrennung also dem Oxidatorgas gleichzusetzen. Der Prozess muss so gefahren werden, dass nur die zur Verbrennung erforderliche Sauerstoff-Menge freigesetzt wird. Allerdings stört überschüssiger Sauerstoff nicht allzu sehr, er würde ebenfalls im Kreis geführt und bremst dadurch die Sauerstoff-Abgabe des OSM.

Offensichtlich kann beim Wasserstoff-Kreislaufmotor prinzipiell mehr Sauerstoff im Kreislaufgas erzeugt werden, als für die Verbrennung einer bestimmten Wasserstoff-Menge erforderlich ist. Ohne Regulierung der Sauerstoff-Freisetzung würde dies jedoch zur Erhöhung des Systemdrucks aufgrund eines steigenden SauerstoffGehaltes im Kreislaufgas führen. Darüber hinaus würden sich die motorischen Verbrennungsbedingungen ändern. Deshalb ist eine Regulierung des SauerstoffGehaltes im Kreislaufgas erforderlich.

Erfindungsgemäß wird der Sauerstoff-Gehalt im Kreislaufgas eingestellt, indem die Spülzeit des jeweiligen OSM-Reaktors mit dem Kreislaufgas variiert wird. Dafür wird ein Bypassventil eingesetzt, das durch die Überbrückung der OSM-Reaktoren eine freie Variation der Spülzeit der OSM-Reaktoren mit dem Kreislaufgas ermöglicht. Vorteilhaft ist dabei, dass für die Regeneration der OSM-Reaktoren mit Luft eine von der Spülzeit mit Kreislaufgas abweichende Regenerationszeit verwendet werden kann. Dadurch kann eine stets ausreichende Beladung der OSM-Keramik mit Sauerstoff gesichert werden.

Nachfolgend soll die Erfindung anhand eines Ausführungsbeispiels mithilfe einer Zeichnung näher erläutert werden. Hierzu zeigt:

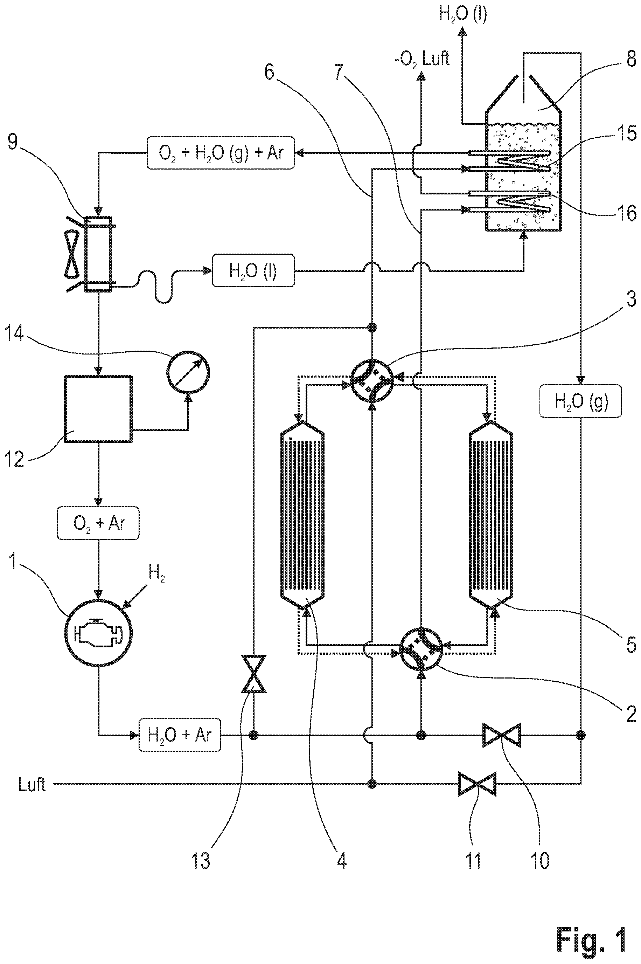

- Fig. 1: ein Funktionsschema zur Erläuterung des erfindungsgemäßen Verfahrens.

Das Verfahren zur Sauerstoff-Versorgung eines Wasserstoff-Kreislaufmotors 1 mit 100 kW Brennstoffleistung ist in Fig. 1 schematisch dargestellt. Das Abgas des Wasserstoff-Kreislaufmotors 1 wird unmittelbar über ein Umschaltventil 2 einem ersten Reaktor 4 zugeführt, der mit einer OSM-Keramik gefüllt ist. Als OSM-Keramik wird ein Mischoxid der Zusammensetzung Ca_{0,5}Sr_{0,5}Fe_{0,5}Mn_{0,5}O_{3-δ} verwendet, das durch Festkörperreaktion aus den einzelnen Oxiden bzw. Carbonaten synthetisiert wurde. Es wurde mit 25 Vol-% eines organischen Ausbrennstoffes vermischt, unter Zusatz von organischen Bindemitteln und Stellmitteln plastifiziert und zu dünnen Stäben mit ca. 2 mm Durchmesser extrudiert. Die Extrudate werden bei 1.420 °C für 4 Stunden gesintert und danach in Stücken von 1 bis 3 cm Länge gebrochen. Jeweils 15 kg des Granulats mit einer offenen Porosität von 27 bis 30 Vol-% werden in den ersten Reaktor 4 und einen zweiten Reaktor 5 gefüllt. Bei der Spülung des ersten Reaktors 4 mit dem Kreislaufgas für 20 Sekunden werden aufgrund des niedrigen Sauerstoff-Partialdruckes des Wasserdampf-Argon-Gemisches und der ansteigenden Temperatur im ersten Reaktor 4 ca. 100 Normliter Sauerstoff aus der OSM-Keramik freigesetzt.

Während der Spülung im ersten Reaktor 4 wird die OSM-Keramik im zweiten Reaktor 5, dem Luft über ein weiteres Umschaltventil 3 zugeführt wird, regeneriert. Das mit dem Sauerstoff im ersten Reaktor 4 angereicherte Kreislaufgas wird über das weitere Umschaltventil 3 und von diesem über eine abgehende Sammelleitung für Kreislaufgas 6 durch einen ersten Wärmetauscher 15 eines Niederdruck-Dampferzeugers 8, in dem ein Teil der Abgaswärme zur Dampferzeugung (< 110 °C, < 0,5 bar) verwendet wird, geführt.

Der Niederdruck-Dampferzeuger 8 kann darüber hinaus über einen separaten, weiteren Wärmetauscher 16 auch mit der sauerstoffabgereicherten Abluft, die abwechselnd vom zweiten Reaktor 5 oder vom ersten Reaktor 4 über die Sammelleitung für Abluft 7 geführt wird, beheizt werden. Das Gasgemisch der Sammelleitung für Kreislaufgas 6 aus Wasserdampf, Argon und Sauerstoff wird nach Durchlaufen des ersten Wärmetauschers 15 des Niederdruck-Dampferzeugers 8 nachfolgend durch einen luftgekühlten Kondensator 9 geführt, so dass der Wasserdampf auskondensiert wird. Das flüssige Wasser wird in die Flüssigphase des Niederdruck-Dampferzeugers 8 eingeleitet, wobei sich ansammelndes überschüssiges Wasser über einen Überlauf abgelassen wird. Das Kreislaufgas aus Argon und Sauerstoff wird in einem Membrangasspeicher 12 bei etwa Umgebungsdruck zwischengespeichert und von diesem dem Wasserstoff-Kreislaufmotor 1 wieder zugeführt. Der Membrangasspeicher 12 dient zur besseren Homogenisierung des Kreislaufgases, da in diesem schwankende Sauerstoff-Gehalte auftreten können. Der Sauerstoff-Partialdruck im Membrangasspeicher 12 wird mit einem Sauerstoffsensor 14 ständig überwacht und auf den voreingestellten Sollwert gefahren, indem bei zu niedrigem Sauerstoff-Gehalt die Spülzeit im ersten Reaktor 4 und / oder zweiten Reaktor 5 mit Kreislaufgas erhöht, bei zu hohem Sauerstoff-Gehalt hingegen gesenkt wird. Der Membrangasspeicher 12 dient auch dazu, das System nach dem Stillstand ohne externe Gasversorgung wieder anzufahren.

Damit beim Umschalten der Zufuhr des Kreislaufgases zum ersten Reaktor 4 auf den zweiten Reaktor 5 bzw. beim Umschalten der Zufuhr des Kreislaufgases zum zweiten Reaktor 5 auf den ersten Reaktor 4 kein Argon verloren geht, wird am Ende des Spülvorgangs, also kurz vor dem Umschalten, über ein Dampfdosierventil für Kreislaufgas 10, welches eingangsseitig mit dem Niederdruck-Dampferzeuger 8 verbunden ist, Niederdruckdampf ins Kreislaufgas eindosiert, so dass im ersten Reaktor 4 bzw. zweiten Reaktor 5 verbliebene Gasreste mit Niederdruckdampf in die Sammelleitung für Kreislaufgas 6 ausgespült werden. Gleichzeitig wird der im Regenerationszyklus mit Luft befindliche zweite Reaktor 5 bzw. erste Reaktor 4 am Ende des Zyklus über ein Ventil für Frischluft 11, welches eingangsseitig mit dem Niederdruck-Dampferzeuger 8 verbunden ist, mit Niederdruckdampf gespült, um die Restluft aus dem zweiten Reaktor 5 bzw. ersten Reaktor 4 in die Sammelleitung für Abluft 7 auszutragen, damit keine Fremdgase bzw. Restluft im zweiten Reaktor 5 bzw. ersten Reaktor 4 verbleiben und nachfolgend ins Kreislaufgas gelangen. Nach dieser Spülphase mit Niederdruckdampf schalten beide Umschaltventile 2 und 3 gleichzeitig, wodurch die Zufuhr des Kreislaufgases vom ersten Reaktor 4 auf den zweiten Reaktor 5 bzw. vom zweiten Reaktor 5 auf den ersten Reaktor 4 umgelenkt wird und gleichzeitig die Luftzufuhr vom zweiten Reaktor 5 auf den ersten Reaktor 4 bzw. vom ersten Reaktor 4 auf den zweiten Reaktor 5 dadurch erfolgt.

Wie vorstehend erläutert wurde, kann mehr Sauerstoff im Kreislaufgas erzeugt werden, als für die Verbrennung einer bestimmten Wasserstoff-Menge erforderlich ist. Der Sauerstoff-Gehalt im Kreislaufgas wird in einfacher Weise eingestellt, indem die Spülzeit des ersten Reaktors 4 bzw. des zweiten Reaktors 5 mit dem Kreislaufgas variiert wird. Diesem Zweck dient ein Bypassventil 13, das eine freie Variation der Spülzeit des ersten Reaktors 4 bzw. des zweiten Reaktors 5 mit dem Kreislaufgas ermöglicht. Vorteilhaft ist dabei, dass für die Regeneration des zweiten Reaktors 5 bzw. des ersten Reaktors 4 mit Luft eine von der Spülzeit mit Kreislaufgas abweichende Regenerationszeit verwendet werden kann. Dadurch kann eine ausreichende Beladung der OSM-Keramik mit Sauerstoff gesichert werden.

### Bezugszeichenliste

- 1: Wasserstoff-Kreislaufmotor
- 2: Umschaltventil
- 3: weiteres Umschaltventil
- 4: erster Reaktor mit OSM-Schüttung
- 5: zweiter Reaktor mit OSM-Schüttung
- 6: Sammelleitung für Kreislaufgas
- 7: Sammelleitung für Abluft
- 8: Niederdruck-Dampferzeuger
- 9: Kondensator
- 10: Dampfdosierventil für Kreislaufgas
- 11: Ventil für Frischluft
- 12: Membrangaspeicher
- 13: Bypassventil
- 14: Sauerstoffsensor
- 15: erster Wärmetauscher
- 16: weiterer Wärmetauscher

## Patentansprüche

1. Verfahren zum Betrieb eines Wasserstoff-Kreislaufmotors (1) mit einem Oxidatorgas aus Sauerstoff und einem an der Verbrennung nicht beteiligten Inertgas, einer Kreislaufführung eines Gasgemisches sowie einer Abtrennung eines Verbrennungsproduktes Wasser durch Auskondensation, **dadurch gekennzeichnet,**
- **dass** der für die Verbrennung benötigte Sauerstoff unmittelbar aus der den Wasserstoff-Kreislaufmotor umgebenden Luft gewonnen wird,
- indem mindestens zwei mit Sauerstoffspeichermaterial befüllte Reaktoren (4, 5) jeweils abwechselnd in zwei Phasen betrieben werden, wobei jeweils
- in einer ersten Phase die Reaktoren (4, 5) mit Luft befüllt werden, so dass sich der in der Luft befindliche Sauerstoff in das Sauerstoffspeichermaterial einlagert,
- in einer zweiten Phase die Reaktoren, die mit dem Sauerstoff im Sauerstoffspeichermaterial angereichert wurden, mit dem durch die Verbrennung ausgestoßenen Gasgemisch gespült werden, so dass das Gasgemisch mit dem im Sauerstoffspeichermaterial eingelagerten Sauerstoff angereichert wird, und
- nach der zweiten Phase das entstandene Gasgemisch der Kreislaufführung zugeführt wird, wobei nachfolgend das Wasser durch Auskondensation abgetrennt wird, so dass das Gasgemisch als Oxidatorgas, enthaltend den Sauerstoff und das Inertgas, dem Wasserstoff-Kreislaufmotor zugeführt wird.

2. Verfahren nach Anspruch 1, **dadurch gekennzeichnet, dass** als Sauerstoffspeichermaterial eine OSM-Keramik der Zusammensetzung Ca_{0,5}Sr_{0,5}Fe_{0,5}Mn_{0,5}O_{3-δ} verwendet wird, die durch Festkörperreaktion aus den einzelnen Oxiden bzw. Carbonaten synthetisiert wurde.

3. Verfahren nach Anspruch 1, **dadurch gekennzeichnet, dass** mittels eines Bypassventils (13) eine beliebige Spülzeit der Reaktoren (4, 5) einstellbar ist und dadurch der im Sauerstoffspeichermaterial einzulagernde Sauerstoff beliebig einstellbar ist.

4. Verfahren nach Anspruch 1, **dadurch gekennzeichnet, dass** das nach der zweiten Phase der Kreislaufführung zugeführte Gasgemisch eine Abgaswärme aufweist, die zur Erzeugung von Niederdruckdampf genutzt wird.

5. Verfahren nach Anspruch 1 oder 4, **dadurch gekennzeichnet, dass** in der ersten Phase eine mit Sauerstoff abgereicherte Luft entsteht, die eine Wärme aufweist, die zur Erzeugung von Niederdruckdampf genutzt wird.

6. Verfahren nach Anspruch 1, **dadurch gekennzeichnet, dass** im Kreislauf ein Membrangasspeicher (12) zur Speicherung des Oxidatorgases enthalten ist, der zur Homogenisierung des Gasgemisches dient und der ein sicheres Anfahren des Wasserstoff-Kreislaufmotors (1) ermöglicht.

7. Verfahren nach Anspruch 1, **dadurch gekennzeichnet, dass** Umschaltventile (2, 3) zum Umschalten der beiden Phasen verwendet werden, die Eingängen der Reaktoren (4, 5) vor- und Ausgängen der Reaktoren (4, 5) nachgeordnet werden, wobei die Eingänge und Ausgänge der Reaktoren (4, 5) während der ersten Phase zu Ausgängen und Eingängen der Reaktoren (4, 5) in der zweiten Phase werden.

8. Verfahren nach Anspruch 1, **dadurch gekennzeichnet, dass** Verluste an Inertgas und der Eintrag von Luftstickstoff durch eine Zwischenspülung mit Niederdruckdampf vermieden werden.

## Claims

1. Method of operating a closed-cycle hydrogen engine (1) with an oxidizer gas composed of oxygen and an inert gas uninvolved in the combustion, cycling of a gas mixture and removal of a water combustion product by condensation, **characterized in that**
- the oxygen required for the combustion is obtained directly from the air surrounding the closed-cycle hydrogen engine,
- by alternately operating each of at least two reactors (4, 5) filled with oxygen storage material in two phases, wherein in each case
- in a first phase the reactors (4, 5) are filled with air, such that the oxygen present in the air is intercalated into the oxygen storage material,
- in a second phase the reactors that have been enriched with the oxygen in the oxygen storage material are purged with the gas mixture discharged as a result of the combustion, such that the gas mixture is enriched with the oxygen intercalated in the oxygen storage material, and
- after the second phase the resultant gas mixture is fed to the closed cycle, wherein subsequently the water is removed by condensation, such that the gas mixture is fed to the closed-cycle hydrogen engine as oxidizer gas comprising the oxygen and the inert gas.

2. Method according to Claim 1, **characterized in that** the oxygen storage material used is an OSM ceramic of the composition Ca_{0.5}Sr_{0.5}Fe_{0.5}Mn_{0.5}O_{3-δ} which has been synthesized by solid-state reaction from the individual oxides or carbonates.

3. Method according to Claim 1, **characterized in that**, by means of a bypass valve (13), any purge time of the reactors (4, 5) can be adjusted and hence the oxygen to be intercalated in the oxygen storage material can be adjusted as desired.

4. Method according to Claim 1, **characterized in that** the gas mixture fed to the closed cycle after the second phase has an offgas heat which is utilized for generation of low-pressure steam.

5. Method according to Claim 1 or 4, **characterized in that** the first phase gives rise to an oxygen-depleted air having heat which is utilized for generation of low-pressure steam.

6. Method according to Claim 1, **characterized in that** the closed cycle contains a membrane gas storage medium (12) for storage of the oxidizer gas, which serves for homogenization of the gas mixture and which enables reliable startup of the closed-cycle hydrogen engine (1).

7. Method according to Claim 1, **characterized in that** switchover valves (2, 3) are used to switch between the two phases, which are disposed upstream of inlets to the reactors (4, 5) and downstream of outlets from the reactors (4, 5), wherein the inlets and outlets of the reactors (4, 5) during the first phase become outlets and inlets of the reactors (4, 5) in the second phase.

8. Method according to Claim 1, **characterized in that** losses of inert gas and the introduction of atmospheric nitrogen are avoided by intermediate purging with low-pressure steam.

## Revendications

1. Procédé pour le fonctionnement d'un moteur (1) à circuit d'hydrogène avec un gaz oxydant à base d'oxygène et un gaz inerte ne participant pas à la combustion, une mise en circuit d'un mélange de gaz ainsi qu'une séparation d'un produit de combustion eau par condensation, **caractérisé en ce que**
- l'oxygène requis pour la combustion est obtenu directement à partir de l'air entourant le moteur à circuit d'hydrogène,
- par le fait qu'au moins deux réacteurs (4, 5) remplis de matière à stockage d'oxygène sont mis en action chacun alternativement en deux phases, dans lesquelles chaque fois
- dans une première phase les réacteurs (4, 5) sont remplis avec de l'air, de sorte que l'oxygène présent dans l'air s'accumule dans la matière à stockage d'oxygène,
- dans une deuxième phase les réacteurs qui ont été enrichis avec l'oxygène dans la matière à stockage d'oxygène sont balayés avec le mélange de gaz expulsé par la combustion, de sorte que le mélange de gaz est enrichi avec l'oxygène accumulé dans la matière à stockage d'oxygène, et
- après la deuxième phase le mélange de gaz résultant est envoyé à la mise en circuit, l'eau étant ensuite séparée par condensation, de sorte que le mélange de gaz est envoyé au moteur à circuit d'hydrogène, en tant que gaz oxydant contenant l'oxygène et le gaz inerte.

2. Procédé selon la revendication 1, **caractérisé en ce qu'**en tant que matière à stockage d'oxygène est utilisée une céramique OSM (matière à stockage d'oxygène) de composition Ca_{0,5}Sr_{0,5}Fe_{0,5}Mn_{0,5}O_{3-δ}, qui a été synthétisée à partir d'oxydes ou carbonates individuels par réaction de corps solides.

3. Procédé selon la revendication 1, **caractérisé en ce qu'**un temps quelconque de balayage des réacteurs (4, 5) est réglable au moyen d'une soupape de dérivation (13) et ainsi l'oxygène s'accumulant dans la matière à stockage d'oxygène est arbitrairement réglable.

4. Procédé selon la revendication 1, **caractérisé en ce que** le mélange de gaz envoyé à la mise en circuit après la deuxième phase présente une chaleur de gaz d'échappement qui est utilisée pour la production de vapeur à basse pression.

5. Procédé selon la revendication 1 ou 4, **caractérisé en ce que** dans la première phase est produit un air enrichi avec de l'oxygène, qui présente une chaleur qui est utilisée pour la production de vapeur à basse pression.

6. Procédé selon la revendication 1, **caractérisé en ce que** dans le circuit est contenu un réservoir de gaz à membrane (12) destiné au stockage de gaz oxydant, qui sert à l'homogénéisation du mélange de gaz et qui permet un démarrage sûr du moteur (1) à circuit d'hydrogène.

7. Procédé selon la revendication 1, **caractérisé en ce que** sont utilisées des soupapes d'inversion (2, 3) destinées au changement des deux phases, qui sont disposées avant les entrées des réacteurs (4, 5) et après les sorties des réacteurs (4, 5), les entrées et sorties des réacteurs (4, 5) pendant la première phase devenant sorties et entrées des réacteurs (4, 5) dans la deuxième phase.

8. Procédé selon la revendication 1, **caractérisé en ce que** des pertes de gaz inerte et l'introduction d'azote de l'air sont évitées par un balayage intermédiaire avec de la vapeur à basse pression.
